# EUROPÄISCHE PATENTANMELDUNG

(11) **EP 0 549 032 A1**
(43) Veröffentlichungstag der Anmeldung: **30.06.1993**
(21) Anmeldenummer: 92203882.3
(22) Anmeldetag: 14.12.1992
(51) Int. Cl.: H04J 3/12

(54) **Übertragungssystem mit einer Schaltungsanordnung zur Feststellung des Wechsels der Kennung in zyklisch ankommenden Datenblöcken**

(30) Priorität: 21.12.1991 DE 4142549
(71) Anmelder: Philips Patentverwaltung GmbH, 22335 Hamburg (DE); Philips Electronics N.V., 5621 BA Eindhoven (NL)
(72) Erfinder: Behrens, Michael, Dr.-Ing., W-8500 Nürnberg 10 (DE); Lieder, Roland, Dipl.-Ing., W-8500 Nürnberg 10 (DE)
(74) Vertreter: Volmer, Georg, Dipl.-Ing.

(57) **Zusammenfassung**

Die Erfindung bezieht sich auf ein Übertragungssystem mit einer Schaltungsanordnung zur Feststellung des Wechsels der Kennung in zyklisch ankommenden Datenblöcken, die eine Speicheranordnung (1), eine Vergleichsschaltung (38) und eine Steueranordnung (10) enthält. Die Speicheranordnung (1) mit wenigstens drei Speichern (2, 3, 4) dient zur Speicherung eines markierten Datenblocks mit der gültigen Kennung und von wenigstens zwei hintereinander ankommenden, neuen Datenblöcken. Die Vergleichsanordnung (38) ist zum Vergleich der gespeicherten Datenblöcke bestimmt. Die Steueranordnung (10) dient zur Markierung durch Speicherung der Benennung des Speichers (2, 3, 4), der den Datenblock mit der gültigen Kennung enthält. Weiter ist die Steueranordnung (10) nur bei Gleichheit der Kennungen der neuen Datenblöcke und bei Ungleichheit der Kennung der neuen Datenblöcke mit der Kennung des markierten Datenblocks zur Feststellung eines Wechsels der Kennung und zur Markierung eines neuen Datenblocks mit der gültigen Kennung vorgesehen.

## Beschreibung

Die Erfindung bezieht sich auf ein Übertragungssystem mit einer Schaltungsanordnung zur Feststellung des Wechsels der Kennung in zyklisch ankommenden Datenblöcken und auf eine Schaltungsanordnung zur Verwendung in einem solchen Übertragungssystem. Bei Übertragungsvorrichtungen, die Daten vermitteln, wird insbesondere bei digitalen Systemen der digitalen synchronen Hierachie eine Kennung den Daten hinzufügt. Beispielsweise wird bei der Übertragung eines virtuellen Containers VC-4 (vgl. CCITT-Empfehlung G 709) alle 125 µs ein Byte eines 64 Byte umfassenden Datenblocks mitübertragen. Ein Datenblock mit einer bestimmten Kennung wiederholt sich eine gewisse Zeit, bevor ein Datenblock mit einer neuen Kennung übertragen wird. Eine solche Kennung dient beispielsweise zur Kennzeichnung eines Absenders. Bei diesen zyklisch ankommenden Datenblöcken muß ermittelt werden, wann ein Wechsel der Kennung stattfindet. Ein Wechsel der Kennung darf jedoch nicht gemeldet werden, wenn in einer Kennung Bitfehler vorhanden sind.

Aus der CCITT-Empfehlung G 709 (Kapitel 3.1.6 - Pointer interpretation) ist des weiteren bekannt, daß bei jeder Veränderung des gültigen Pointerwerts, diese ignoriert wird, bis ein neuer Pointerwert dreimal hintereinander empfangen wird.

Der Erfindung liegt daher die Aufgabe zugrunde, ein Übertragungssystem der eingangs genannten Art zu schaffen, die einen Wechsel der Kennung in zyklisch ankommenden Datenblöcken erkennt und bei Bitfehlern keinen Wechsel der Kennung angibt.

Die Aufgabe wird bei einem Übertragungssytem und einer Schaltungsanordnung zur Feststellung des Wechsels der Kennung in zyklisch ankommenden Datenblöcken durch folgende Merkmale gelöst:
Das Übertragungssystgem enthält
eine Speicheranordnung mit wenigstens drei Speichern zur Speicherung eines markierten Datenblocks mit der gültigen Kennung und von wenigstens zwei hintereinander ankommenden, neuen Datenblöcken,
eine Vergleichsanordnung zum Vergleich der gespeicherten Datenblöcke und
eine Steueranordnung, die
- zur Markierung durch Speicherung der Benennung des Speichers, der den Datenblock mit der gültigen Kennung enthält,
- nur bei Gleichheit der Kennungen der neuen Datenblöcke und bei Ungleichheit der Kennung der neuen Datenblöcke mit der Kennung des markierten Datenblocks zur Feststellung eines Wechsels der Kennung und
- zur Markierung eines neuen Datenblocks mit der gültigen Kennung vorgesehen ist.

Bei dem erfindungsgemäßen Übertragungssystem werden in einer Speicheranordnung mit wenigstens drei Speichern jeweils ein Datenblock abgespeichert. Ein Datenblock enthält die gültige Kennung und ist vor den weiteren gespeicherten, neuen Datenblöcken in die Speicheranordnung geschrieben worden. Nach dem Einschalten wird der zuerst eingeschriebene Datenblock als Datenblock mit der gültigen Kennung angesehen. Der Datenblock mit der gültigen Kennung wird markiert. In einer Vergleichsanordnung werden die in der Speicheranordnung gespeicherten Datenblöcke verglichen. Ist die Kennung eines neuen Datenblockes mit der im markierten Datenblock enthaltenen gültigen Kennung identisch, so wir von der Steueranordnung kein Wechsel der Kennung festgestellt. Das trifft auch zu wenn die anderen neuen Datenblöcke eine unterschiedliche Kennung aufweisen. Ein Wechsel der Kennung wird nur dann von der Steueranordnung festgestellt, wenn die Kennungen der neuen Datenblöcke gleich sind, und die Kennung des markierten Datenblocks von der Kennung der neuen Datenblöcke abweicht. In diesem Fall wird ein neuer Datenblock markiert, der die neue gültige Kennung enthält. Wenn Bitfehler in einer Kennung auftreten, wird kein Wechsel der Kennung festgestellt, da zu einer solchen Feststellung die Voraussetzung gehört, daß alle neuen Datenblöcke die identische Kennung aufweisen.

Der Datenblock mit der gültigen Kennung könnte beispielsweise immer in einem bestimmten ausgewählten Speicher abgelegt sein. Hierbei ist erforderlich, daß nach Vergleich der in den verschiedenen Speichern enthaltenen Datenblöcke der Datenblock mit der gültigen Kennung in dem bestimmten ausgewählten Speicher gegeben werden muß. Es ist also jeweils eine weitere Speicheroperation erforderlich. Bei der erfindungsgemäßen Schaltungsanordnung erfolgt eine Markierung des Speichers, der den Datenblock mit der gültigen Kennung enthält. Die Steuerschaltung merkt sich den Speicher, der den Datenblock mit der gültigen Kennung enthält (Speicherung der Benennung des Speichers).

In einer Weiterbildung der Erfindung enthält die Speicheranordnung drei Speicher. Ein Speicher dient zur Speicherung des markierten Datenblocks und die beiden anderen Speicher zur Speicherung der neuen Datenblöcke. Hierbei wird es als ausreichend betrachtet, einen Wechsel der Kennung festzustellen, wenn die Kennungen von zwei neuen Datenblöcken identisch sind und von der Kennung des markierten Datenblocks abweichen.

Eine Ausführungsform der Vergleichsanordnung enthält drei Vergleicher. Der erste Vergleicher ist zum Vergleich des Inhalts des ersten und des Inhalts des zweiten Speichers, der zweite Vergleicher zum Vergleich des Inhalts des zweiten und des Inhalts des dritten Speichers und der dritte Vergleicher zum Vergleich des Inhalts des dritten und des Inhalts des ersten Speichers vorgesehen. Die Vergleicher dienen zur Abgabe der Vergleichsergebnisse an die Steueranordnung. Die Steueranordnung erfährt aus den Vergleichsergebnissen, ob die Kennungen der neuen Datenblöcke mit der Kennung des markierten Datenblocks identisch ist oder ob unterschiedliche Kennungen in den Datenblöcken enthalten sind.

In einer Ausführungsform enthält die Steueranordnung einen Automaten und einen Prozessor. Der Automat ist zur Steuerung des Schreibvorgangs in die Speicheranordnung, zur Auswertung der von der Vergleichsanordnung gelieferten Vergleichsergebnisse und zur Meldung des Wechsels der Kennung an den Prozessor vorgesehen. Der Prozessor ist zur Auslesung des markierten Datenblocks mit der gültigen Kennung aus der Speicheranordnung und zur Auswertung der Kennung bestimmt. Der Automat kann beispielsweise ein Teil einer anwendungsspezifischen integrierten Schaltung sein und durch ein Zustandsdiagramm oder ein Flußablaufdiagramm beschrieben werden. Der Automat entlastet den Prozessor von zeitkritischen Aufgaben, so daß der Prozessor nach der Auslesung einer gültigen Kennung nur noch für die Auswertung der Kennung zuständig ist.

Der Automat teilt dem Prozessor noch mit, welcher Speicher den Datenblock mit der gültigen Kennung enthält. Mit dieser Information kann der Prozessor gezielt aus diesem Speicher die gültige Kennung auslesen.

Verwendet werden kann die Schaltungsanordnung in einem System der digitalen synchronen Hierachie, da sich bei einem solchen System Datenblöcke mit einer Kennung zyklisch wiederholen.

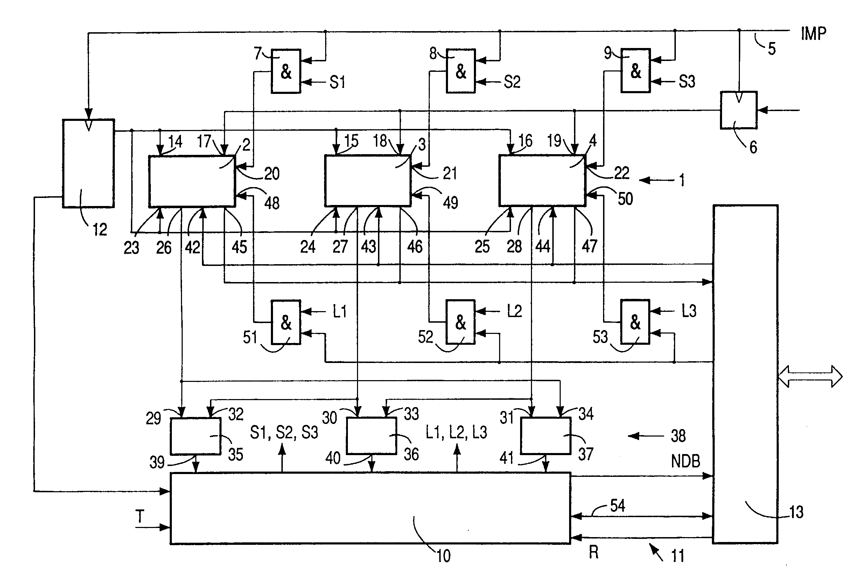

Ein Ausführungsbeispiel der Erfindung wird nachstehend anhand der Figur näher erläutert.

Das in der Figur dargestellte Ausführungsbeispiel einer Schaltungsanordnung zur Feststellung des Wechsels der Kennung in zyklisch ankommenden Datenblöcken enthält eine Speicheranordnung 1 mit drei Speichern 2 bis 4. Jeder Speicher 2 bis 4 speichert einen Datenblock, der beispielsweise 64 Byte umfaßt. Ein Byte eines Datenblockes kann dabei alle 125 µs der Speicheranordnung 1 zugeführt werden. Ein solches Byte eines Datenblocks wird beispielsweise mit einem virtuellen Container VC-4 in einer Übertragungsanordnung der digitalen synchronen Hierachie (vgl. CCITT-Empfehlung G 709) mitübertragen.

Der Schaltungteil eines solchen Systems der digitalen synchronen Hierachie, der die Datenblöcke liefert, führt der Schaltungsanordnung auch alle 125 µs einen Impuls IMP auf einer Leitung 5 zu. Ein solcher Impuls IMP kennzeichnet jeweils den Beginn eines Bytes eines Datenblocks. Die Bytes eines Datenblockes erhält ein Kippglied 6, das jeweils ein Byte abtastet, wenn eine positive Flanke des Impulses IMP anliegt. Die Leitung 5 ist noch mit jeweils einem Eingang von drei UND-Gattern 7 bis 9 verbunden. Dem anderen Eingang der UND-Gatter 7 wird ein Freigabesignal S1, dem anderen Eingang des UND-Gatters 8 ein Freigabesignal S2 und dem anderen Eingang des UND-Gatters 9 ein Freigabesignal S3 von einem Automaten 10 geliefert, der Teil einer Steueranordnung 11 ist. Die Leitung 5 ist noch mit dem Takteingang eines modulo-64-Zählers 12 verbunden, der Schreibadressen und Leseadressen für die Speicher 2 bis 4 generiert. Der Ausgang des Zählers 12 ist mit den Schreibadresseneingängen 14 bis 16 der Speicher 2 bis 4 verbunden. Der Ausgang des Kippgliedes 6 ist an die Dateneingänge 17 bis 19 der Speicher 2 bis 4 angeschlossen. Die Dateneingänge 17 bis 19 der Speicher 2 bis 4 werden nur freigegeben, wenn über die UND-Gatter 7 bis 8 die positive Flanke des Impulses IMP an dem jeweiligen schreibseitigen Freigabeeingang 20 bis 22 eines Speichers 2 bis 4 anliegt. Es sei noch erwähnt, daß der Automat 10 von einem Prozessor 13, der auch ein Bestandteil der Steueranordnung 11 ist, zurückgesetzt werden kann (über Anschluß R) und daß der Zähler 12 über eine Verbindung dem Automaten 10 zur Synchronisation mitteilt, wenn der Zählerstand 63 erreicht ist.

Der Ausgang des Zählers 12 ist noch jeweils mit einem Leseadresseneingang 23 bis 25 eines Speichers 2 bis 4 verbunden. Wenn an einem Leseadresseneingang 23 bis 25 der Speicher 2 bis 4 eine Leseadresse anliegt, steht das dazugehörige Byte eines Datenblockes an dem betreffenden Datenausgang 26 bis 28 sofort zur Verfügung. Der Datenausgang 26 des Speichers 2 ist mit einem Eingang 29 eines Vergleichers 35 und einem Eingang 34 eines Vergleichers 37 verbunden. Ein Vergleicher 36 weist zwei Eingänge 30 und 33 auf. Der Eingang 30 ist an den Datenausgang 27 des Speichers 3 und an den Eingang 32 des Vergleichers 35 angeschlossen. Der andere Eingang 33 des Vergleichers 36 weist mit dem Datenausgang 28 des Speichers 4 und dem Eingang 31 des Vergleichers 37 eine Verbindung auf. Die Vergleicher 35 bis 37 bilden eine Vergleichsanordnung 38. Die Vergleichsergebnisse der Vergleicher 35 bis 37 werden über ihre jeweiligen Ausgänge 39 bis 41 an den Automaten 10 gegeben.

Mit der positiven Flanke eine Impulses IMP wird ein Byte eines Datenblockes in das Kippglied 6 geschrieben, das am Ausgang des Kippglied 6 nach einer kurzen Verzögerungszeit zur Verfügung steht. Der Impuls IMP bewirkt ebenfalls ein Fortschalten des Zählers 12, so daß dieser eine neue Schreibadresse an die Schreibadresseneingänge 14 bis 16 der Speicher 2 bis 4 anlegt. An den Dateneingängen 17 bis 19 der Speicher 2 bis 4 liegt ebenfalls das Byte eines Datenblockes an, daß im Kippglied 6 gespeichert ist. Geschrieben wird ein Byte in einen Speicher 2 bis 4, wenn an einem Freigabeeingang 20 bis 22 eine positive Flanke des Impulses IMP anliegt. Dieser Impuls IMP kann nur dann an einen Freigabeeingang 20 bis 22 gelangen, wenn einem der UND-Gatter 7 bis 9 ein Freigabesignal S1 bis S3 von dem Automaten 10 zugeführt worden ist.

Ist die Schaltungsanordnung in einem stationären Zustand, so kann vorausgesetzt werden, daß in jedem Speicher 2 bis 4 Bytes mindestens eines Datenblocks vorhanden sind. Die von dem Zähler 12 erzeugte Adresse liegt ebenfalls als Leseadresse an einem Leseadresseneingang 23 bis 25 der Speicher 2 bis 4 an. Die Datenausgänge 26 bis 28 der Speicher 2 bis 4 liefern ein Byte eines Datenblockes, wenn eine Leseadresse an den Leseadresseneingängen 23 bis 25 anliegt. Die Vergleicher 35 bis 37 überprüfen, ob die Bytes, die von den Datenausgängen 26 bis 28 abgegeben werden gleich sind. Das Vergleichsergebnis jedes Vergleichers 35 bis 37 wird dem Automaten 10 geliefert, der anhand mehrerer Vergleichsergebnisse Signale für den Prozessor 13 erzeugt.

Im folgenden wird der Automat 10 mittels eines Flußablaufdiagrammes erläutert: 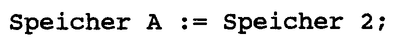 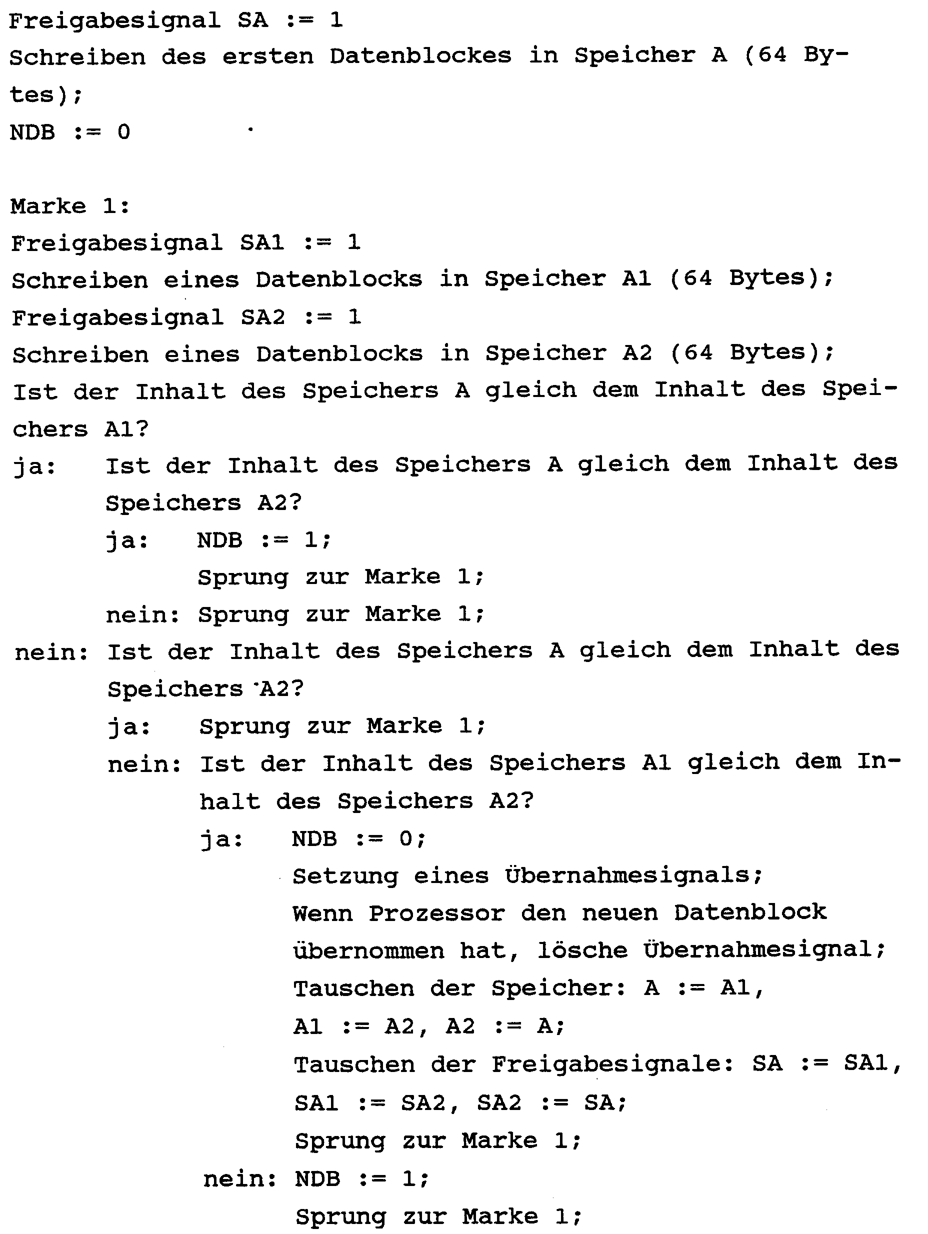
Zuerst wird der Vorgang nach dem Einschalten beschrieben.

Der Speicher 2 wird gleich einem Speicher A und ein Freigabesignal SA gleich "1" gesetzt. Das Freigabesignal SA, das zu Beginn dem Freigabesignal S1 entspricht, gibt den Speicher A frei. Dieses Freigabesignal SA hat eine Dauer von 64 Bytes. Der Automat erzeugt dann ein Signal NDB gleich "0", das dem Prozessor 13 über eine Verbindung zugeführt wird. Wenn das Signal NDB gleich "0" gesetzt ist, wird dem Prozessor mitgeteilt, daß ein neuer gültiger Datenblock ermittelt worden ist. Nach dem Einschalten bedeutet dies, daß in den Speicher 2 ein Datenblock mit der neuen gültigen Kennung geschrieben worden ist.

Nach dem Einschaltvorgang wird in eine Schleife gesprungen, die mit der Marke 1 beginnt und bei der zuerst ein Datenblock in den Speicher A1 geschrieben wird. Hierzu wird ein Freigabesignal SA1 gleich "1" gesetzt, das zu Beginn das Freigabesignal S2 ist. Danach wird ein Datenblock in den Speicher A2 geschrieben. Hierzu ist ebenfalls ein Freigabesignal SA2 gleich "1" gesetzt worden. Zu Beginn ist dieses Freigabesignal SA2 identisch mit dem Freigabesignal S3. Nach dem Einschalten ist der Speicher A1 gleich dem Speicher 3 und der Speicher A2 gleich dem Speicher 4.

Der Automat 10 überprüft anschließend, ob der Inhalt des Speichers A gleich dem Inhalt des Speichers A1 ist. Hierbei werden dem Automaten 10 von den entsprechenden Vergleichern 39 bis 41 die Vergleichsergebnisse für jedes Byte eines Datenblocks zugeführt. Wenn der Inhalt des Speichers A gleich dem Inhalt des Speichers A1 ist, wird überprüft, ob der Inhalt des Speichers A gleich dem Inhalt des Speichers A2 ist. Ist dies der Fall, liegt kein neuer Datenblock vor und es wird das Signal NDB gleich "1" gesetzt, d.h. dem Prozessor 13 wird mitgeteilt, daß kein neuer Datenblock vorliegt. Danach wird zur Marke 1 zurückgesprungen. Ist der Inhalt des Speichers A nicht gleich dem Inhalt des Speichers A2, wird ebenfalls zur Marke 1 zurückgesprungen.

Hat sich herausgestellt, daß der Inhalt des Speichers A nicht gleich dem Inhalt des Speichers A1 ist, wird als nächstes überprüft, ob der Inhalt des Speichers A gleich dem Inhalt des Speichers A2 ist. Ist dies der Fall, wird zur Marke 1 zurückgesprungen. Wenn der Inhalt des Speichers A ungleich dem Inhalt des Speichers A2 ist, wird überprüft, ob die Inhalte der Speicher A1 und A2 gleich sind. Wird dies bejaht, liegt ein neuer Datenblock vor und das Signal NDB wird gleich "0" gesetzt. Dieses Signal NDB wird dem Prozessor 13 zugeführt. Anschließend wird ein Übernahmesignal gesetzt, das dem Prozessor 13 über eine Leitung 54 zugeführt wird. Der Prozessor 13 übernimmt daraufhin aus dem Speicher A1 den Datenblock mit der neuen gültigen Kennung und setzt über die Verbindung 54 ein Antwortsignal. Hat der Automat 10 das Antwortsignal erhalten, löscht er das Übernahmesignal. Anschließend wird als neuer Speicher A der bisherige Speicher A1 gesetzt, der Speicher A1 wird der bisherige Speicher A2 und als Speicher A2 wird der bisherige Speicher A gesetzt. Entsprechend wird die Zuordnung der Freigabesignale SA, SA1 und SA2 zu den Freigabesignalen S1, S2 und S3 getauscht. Es wird also eine zyklische Vertauschung der Speicher und der zugehörigen Freigabesignale bewirkt. Anschließend wird zur Marke 1 zurückgesprungen. Wenn der Inhalt des Speichers A nicht gleich dem Inhalt des Speichers A2 ist, liegt kein neuer Datenblock vor, aber ein Bitfehler. Das Signal NDB wird daher gleich "1" gesetzt. Anschließend wird zur Marke 1 zurückgesprungen.

Durch die Verwendung der Bezeichnungen "Speicher A, A1 und A2" wird der Speicher 2 bis 4 im Automaten 10 markiert, der den Datenblock mit der gültigen Kennung enthält. Das ist jeweils der Speicher A.

Die Übernahme einer neuen Kennung in den Prozessor 13 wird mit bisher noch nicht beschriebenen Schaltelementen realisiert. Die Speicher 2 bis 4 verfügen noch über Leseadresseneingänge 42 bis 44 und über Datenausgänge 45 bis 47. Diese Datenausgänge 45 bis 47 werden nur bei Vorliegen eines Freigabesignals an einem Freigabeeingang 48 bis 50 der Speicher 2 bis 4 freigegeben. Die Freigabeeingänge 48 bis 50 sind mit jeweils einem UND-Gatter 51 bis 53 verbunden, die einen Impuls von dem Prozessor 13 zugeführt bekommen und ein Freigabesignal L1 bis L3 von dem Automaten 10. Der Automat 10 erzeugt die Freigabesignale L1 bis L3, wenn ein neuer Datenblock mit einer neuen gültigen Kennung ermittelt worden ist. Nachdem dem Prozessor 13 mitgeteilt worden ist, daß ein neuer Datenblock vorliegt (NDB gleich "1"), erzeugt dieser zyklisch Leseadressen für die 64 Bytes eines Datenblocks, die dann über einen der Datenausgänge 45 bis 47 der Speicher 2 bis 4 dem Prozessor 13 zugeführt werden. Vorher ist von dem Automaten 10 der Speicher 2 bis 4 freigegeben worden, der den neuen Datenblock enthält. Die Impulse werden jeweils den UND-Gattern 51 bis 53 für jedes neue Byte des Datenblockes mit der neuen gültigen Kennung den UND-Gattern 51 bis 53 zugeführt.

Es sei noch erwähnt, daß der Automat 10 ein Taktsignal T erhält, dessen Frequenz ein ganzzahliges Vielfaches der Frequenz der aufeinanderfolgenden Bytes eines Datenblocks ist. Nachdem der Prozessor die Kennung ausgewertet hat, wird diese weiteren Schaltungselementen mitgeteilt, die daraus Steuersignale für die weitere Übertragung von beispielsweise VC-4-Containern in einem System der digitalen synchronen Hierarchie erzeugen.

Die beschriebene Schaltungsanordnung weist den Vorteil auf, daß eine neue gültige Kennung nur dann übernommen wird, wenn keine Bitfehler auftreten. Dies wird dadurch gewährleistet, daß zwei neue ankommende Datenblöcke den gleichen Inhalt aufweisen müssen.

## Patentansprüche

1. Übertragungssystem mit einer Schaltungsanordnung zur Feststellung des Wechsels der Kennung in zyklisch ankommenden Datenblöcken
mit einer Speicheranordnung (1) mit wenigstens drei Speichern (2, 3, 4) zur Speicherung eines markierten Datenblocks mit der gültigen Kennung und von wenigstens zwei hintereinander ankommenden, neuen Datenblöcken,
mit einer Vergleichsanordnung (38) zum Vergleich der gespeicherten Datenblöcke und
mit einer Steueranordnung (10), die
- zur Markierung durch Speicherung der Benennung des Speichers (2, 3, 4), der den Datenblock mit der gültigen Kennung enthält, vorgesehen ist,
- nur bei Gleichheit der Kennungen der neuen Datenblöcke und bei Ungleichheit der Kennung der neuen Datenblöcke mit der Kennung des markierten Datenblocks zur Feststellung eines Wechsels der Kennung vorgesehen ist und
- zur Markierung eines neuen Datenblocks mit der gültigen Kennung vorgesehen ist.

2. Übertragungssystem nach Anspruch 1,
dadurch gekennzeichnet,
daß die Speicheranordnung (1) drei Speicher (2, 3, 4) enthält und
daß ein Speicher zur Speicherung des markierten Datenblocks und die beiden anderen Speicher zur Speicherung der neuen Datenblöcke dienen.

3. Übertragungssystem nach Anspruch 1 oder 2,
dadurch gekennzeichnet,
daß die Vergleichsanordnung (38) drei Vergleicher (35, 36, 37) enthält,
daß der erste Vergleicher (35) zum Vergleich des Inhalts des ersten (2) und des Inhalts des zweiten Speichers (3), der zweite Vergleicher (36) zum Vergleich des Inhalts des zweiten (3) und des Inhalts des dritten Speichers (4) und der dritte Vergleicher (37) zum Vergleich des Inhalts des dritten (4) und des Inhalts des ersten Speichers (2) vorgesehen sind und
daß die drei Vergleicher (35, 36, 37) zur Abgabe der Vergleichsergebnisse an die Steueranordnung (10) dienen.

4. Übertragungssystem nach einem der vorhergehenden Ansprüche,
dadurch gekennzeichnet,
daß die Steueranordnung (10) einen Automaten und einen Prozessor enthält,
daß der Automat
- zur Steuerung des Schreibvorgangs in die Speicheranordnung (1),
- zur Auswertung der von der Vergleichsanordnung (38) gelieferten Vergleichsergebnisse und
- zur Meldung des Wechsels der Kennung an den Prozessor vorgesehen ist und
daß der Prozessor
- zur Auslesung des markierten Datenblocks mit der gültigen Kennung aus der Speicheranordnung (1) und
- zur Auswertung der Kennung vorgesehen ist.

5. Übertragungssystem nach Anspruch 4,
dadurch gekennzeichnet,
daß der Automat zur Mitteilung der Kennung des Speichers, der den Datenblock mit der gültigen Kennung enthält, an den Prozessor vorgesehen ist.

6. Schaltungsanordnung zur Feststellung des Wechsels der Kennung in zyklisch ankommenden Datenblöcken
mit einer Speicheranordnung (1) mit wenigstens drei Speichern (2, 3, 4) zur Speicherung eines markierten Datenblocks mit der gültigen Kennung und von wenigstens zwei hintereinander ankommenden, neuen Datenblöcken,
mit einer Vergleichsanordnung zum Vergleich der gespeicherten Datenblöcke und
mit einer Steueranordnung (10), die
- zur Markierung durch Speicherung der Benennung des Speichers (2, 3, 4), der den Datenblock mit der gültigen Kennung enthält, vorgesehen ist,
- nur bei Gleichheit der Kennungen der neuen Datenblöcke und bei Ungleichheit der Kennung der neuen Datenblöcke mit der Kennung des markierten Datenblocks zur Feststellung eines Wechsels der Kennung vorgesehen ist und
- zur Markierung eines neuen Datenblocks mit der gültigen Kennung vorgesehen ist.

7. Schaltungsanordnung nach Anspruch 6,
dadurch gekennzeichnet,
daß die Speicheranordnung (1) drei Speicher (2, 3, 4) enthält und
daß ein Speicher zur Speicherung des markierten Datenblocks und die beiden anderen Speicher zur Speicherung der neuen Datenblöcke dienen.

8. Schaltungsanordnung nach Anspruch 6 oder 7,
dadurch gekennzeichnet,
daß die Vergleichsanordnung (38) drei Vergleicher (35, 36, 37) enthält,
daß der erste Vergleicher (35) zum Vergleich des Inhalts des ersten (2) und des Inhalts des zweiten Speichers (3), der zweite Vergleicher (36) zum Vergleich des Inhalts des zweiten (3) und des Inhalts des dritten Speichers (4) und der dritte Vergleicher (39) zum Vergleich des Inhalts des dritten (4) und des Inhalts des ersten Speichers (2) vorgesehen sind und
daß die drei Vergleicher (35, 36, 37) zur Abgabe der Vergleichsergebnisse an die Steueranordnung (10) dienen.

9. Schaltungsanordnung nach einem der vorhergehenden Ansprüche ,
dadurch gekennzeichnet,
daß die Steueranordnung (10) einen Automaten und einen Prozessor enthält,
daß der Automat,
- zur Steuerung des Schreibvorgangs in die Speicheranordnung (1),
- zur Auswertung der von der Vergleichsanordnung (38) gelieferten Vergleichsergebnisse und
- zur Meldung des Wechsels der Kennung an den Prozessor vorgesehen ist und
daß der Prozessor
- zur Auslesung des markierten Datenblocks mit der gültigen Kennung aus der Speicheranordnung (1) und
- zur Auswertung der Kennung vorgesehen ist.

10. Schaltungsanordnung nach Anspruch 9,
dadurch gekennzeichnet,
daß der Automat zur Mitteilung der Kennung des Speichers, der den Datenblock mit der gültigen Kennung enthält, an den Prozessor vorgesehen ist.
